# EUROPEAN PATENT SPECIFICATION

(11) **EP 4 286 836 B1**
(45) Date of publication and mention of the grant of the patent: **11.03.2026**
(21) Application number: 22382528.2
(22) Date of filing: 01.06.2022
(51) Int. Cl.: G01N 21/90

(54) **SYSTEM AND METHOD FOR INSPECTION OF MARKINGS ON THE SURFACE OF CONTAINERS**
SYSTEM UND VERFAHREN ZUR INSPEKTION VON MARKIERUNGEN AUF DER OBERFLÄCHE VON BEHÄLTERN
SYSTÈME ET PROCÉDÉ D'INSPECTION DE MARQUAGES SUR LA SURFACE DE RÉCIPIENTS

(43) Date of publication of application: 06.12.2023
(73) Proprietor: Alta Vision, SRL, 50720 Cartuja Baja (ES)
(72) Inventor: TESSORE, Eduardo Héctor, 22300 Barbastro (ES)
(74) Representative: Torner, Juncosa I Associats, SL

(56) References cited:
- WO-A1-2017/050634
- DE-B3- 102012 100 987
- JP-A- H11 201 906

## Description

### Technical Field

The present invention relates to a system and a method for inspection of markings (e.g., a dot matrix) on the surface of containers, particularly cylindrical containers, including bottles, jars, cans, etc.

### Background of the Invention

Patent DE19832614-C2 describes a method for detecting marks on transparent bottles using a two-camera inspection system.

Patent application CN113579500A discloses a wine bottle laser marking and scribing device. The device includes an assembly line, a rotary coding positioning device and a rotary code reading device. Also, the device includes a CCD ring array comprising four cameras and a light source. Document WO 2017/050634 A1 discloses a system for inspecting the surface of containers. The systems comprises a conveyor for displacing the containers and four acquisition units arranged along the conveyor. Each acquisition unit has an illumination system for illuminating a containers. Each acquisition unit also has mirrors so that it can simultaneously capture images of a container from at least two different viewing directions.

Likewise, existing inspection equipment on the market detects QR codes printed on the label, whose image is black and white (or two-color) and is detected with the container in a single plane.

Despite known solutions, there is a need for new optical systems/methods for inspecting marks on the surface of containers that allow inspection of such marks regardless of the container orientation.

### Description of the Invention

To that end, embodiments of the present invention provide according to a first aspect a system for inspection of marks on the surface of containers, particularly cylindrical. The system comprises displacement means of at least one container, wherein said at least one container includes a mark engraved on a surface thereof; four optical blocks, wherein each optical block is offset with respect to the other three so that between the four optical blocks they cover an area of 360 degrees around an inspection point of the container, and wherein each optical block includes a camera; one illumination system associated with each optical block, wherein each illumination system includes at least one light source configured to illuminate the container simultaneously with a triggering of the camera of its associated optical block; and an analyzer configured to inspect said mark engraved on the surface of the container by means of implementing an algorithm over images of the container obtained by the four optical blocks.

According to the invention, each optical block further includes an optical assembly formed by at least four mirrors to allow the camera of each optical block to acquire two simultaneous images of the container, such that eight different views of the container, arranged at about 45 degrees to each other, are obtained.

Embodiments of the present invention also provide according to a second aspect a method for inspecting marks on the surface of containers. The method comprises: (a) moving at least one container having a mark engraved on a surface of the container via displacement means of an inspection system, wherein the inspection system further comprises four optical blocks and one illumination system associated with each optical block, each optical block is displaced with respect to the other three so that between the four optical blocks they cover an area of 360 degrees around an inspection point of the container, each optical block includes a camera and an optical assembly comprising at least four mirrors to allow the camera of each optical block to acquire two simultaneous images of the container, so as to obtain eight different views of the container arranged at about 45 degrees to each other, and each illumination system includes at least one light source for illuminating the container simultaneously with a triggering of the camera of its associated optical block; b) when the container reaches the inspection point, illuminating the container and acquiring eight views of the container, each of the views being disposed at about 45 degrees to one another; and c) inspecting, by an analyzer, said mark engraved on the surface of the container by implementing an algorithm over the eight acquired views.

The mark, particularly laser engraved or inscribed, can be a QR code, a bar code, or any dot matrix, 2D or 3D.

In an embodiment, the optical assembly includes a fifth mirror to allow adjustments of the camera.

In an embodiment, a synchronization system of the inspection point of the container is also included. Particularly, according to the present invention, the synchronization system includes a photocell and a pulse encoder.

In an embodiment, each illumination system includes two light sources, stroboscopic.

According to the present invention, the container can be made of transparent, translucent or opaque material. Likewise, the container can be made of glass, plastic, metal, wood or cork, among others.

Particularly, if the container is transparent, the two light sources of each illumination system are arranged behind the container. Alternatively, if the container is translucent or opaque, the light sources are arranged in front of the container. In either case, the container is illuminated at an angle of incidence of about 20-25 degrees. In some cases, even if the container is translucent, the light sources may be arranged in front of the container, rather than behind it.

In an embodiment, the cameras are configured to perform said triggering sequentially, one after the other.

Therefore, the present invention provides an eight-view optical system with four cameras to ensure a 360° coverage of the container with sufficient overlap. One of the main advantages of the proposed system is that it has no moving parts and at no time does the system produce mechanical interference with the containers or their handling system. In operational tests, detection performances of more than 98% efficiency have been achieved.

### Brief Description of the Drawings

The previous and other advantages and features will be more fully understood from the following detailed description of embodiments, with reference to the attached figures, which must be considered in an illustrative and non-limiting manner, in which:
Fig. 1 schematically illustrates the architecture and operation of the proposed system for inspection of marks on the surface of containers, according to an embodiment of the present invention.
Figs. 2A and 2B schematically illustrate two different configurations of the location of the light sources.

### Detailed Description of the Invention and of Preferred Embodiments

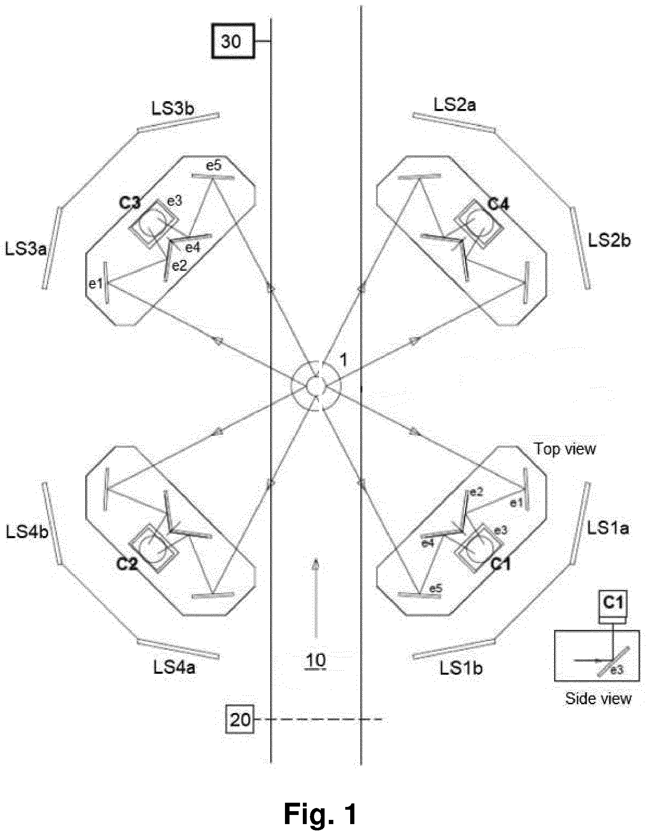

An example of the proposed inspection system is shown in Fig. 1. The system, in addition to the other elements that will be explained in more detail below, comprises an optical system comprising four optical blocks that are arranged in such a way that they cover completely (360 degrees) the entire surface of the container whose mark is to be detected and read. That is, each optical block is located every 90 degrees around the inspection point of the container. In this way, it is not necessary for the container mark to be oriented.

The container 1 can be made of any transparent, translucent or opaque material, for example glass, plastic, metal, wood or cork, among others. In a particular embodiment, the container 1 is a glass bottle. Additionally, in a particular embodiment, the mark 5 is laser engraved (not limiting as in other embodiments the mark 5 may be included on the surface of the container 1 using other techniques or technologies).

Continuing with the explanation of Fig. 1, the proposed inspection system comprises a means of displacement 10, such as a conveyor belt, to transport the containers to the inspection point; the four optical blocks; an illumination system associated with each optical block; a photocell 20, located before the inspection point; and a pulse encoder 30, to indicate the position of the container 1 on the conveyor belt 10 that moves it.

Each optical block includes a camera C1, C2, C3, C4 and an optical assembly/arrangement formed by mirrors, in this embodiment, by five mirrors e1, e2, e3, e4, e5, which allow capturing two simultaneous images of the container 1, located, approximately, at 45 degrees to each other. In some embodiments, not illustrated, the optical assembly/arrangement is only made up of four mirrors (i.e., in this case, the mirror arranged with the camera, and which allows the camera to be adjusted, would not be present).

Each illumination system includes two stroboscopic light sources LS1a, LS1b, LS2a, LS2b, LS3a, LS3b, LS4a, LS4b, LS4b for illuminating the container 1 simultaneously with the triggering of its associated camera C1, C2, C3, C4. In particular, the cameras C1, C2, C3, C4 perform such triggering sequentially, one after the other. Therefore, the four optical blocks are offset from each other along the path of the container 1. The value of this offset will depend on the speed, type and size of the container 1 to be inspected.

To synchronize the inspection point together with the triggering of the corresponding strobes, the photocell 20 and the pulse encoder 30 are used.

With the optical block system, eight views of the container 1 are obtained at approximately every 45 degrees. This allows the observation of 360 degrees around the area of the container 1 where the mark 5 is located.

Once the different images have been obtained, an analyzer, for example, a computer or computing device with one or more processors, performs a processing of the different views obtained using software with computer vision algorithms for analysis and interpretation, depending on the type of mark 5. The software allows analyzing two views with a single camera.

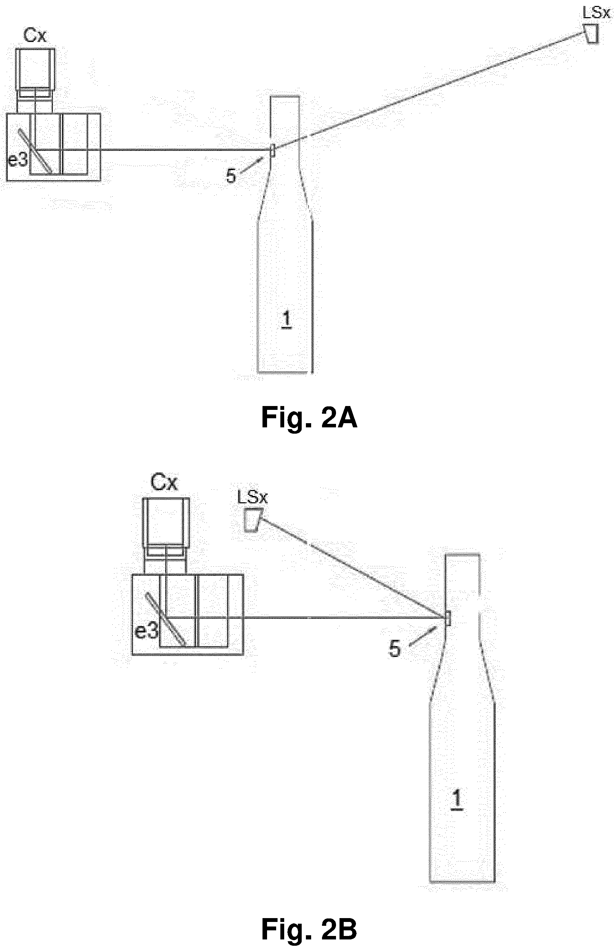

With reference now to Figs. 2A and 2B, two different configurations of the location of the stroboscopic light sources are shown therein, depending on the material of the container 1.

The method of illumination and detection is based on the principle of diffuse reflection of light on the marking area 5. In Fig. 2A, the inspection system has illumination behind the container 1 (particularly for the case of transparent containers), while in Fig. 2B, the inspection system has illumination in front of the container 1 (particularly for the case of transparent, translucent or opaque containers). The position, intensity, and exact size of the strobes is adapted to the type of material and size of the container 1. The illumination of the container particularly is realized with an angle of incidence of about 20-25 degrees.

The scope of the present invention is defined in the appended claims.

## Claims

1. A system for inspection of marks on the surface of containers, comprising:
a means for displacement (10) of at least one container (1), wherein said at least one container (1) includes a mark (5) engraved on a surface of the container (1);
four optical blocks, wherein each optical block is offset with respect to the other three so that between the four optical blocks they cover an area of 360 degrees around an inspection point of the container (1), and wherein each optical block includes a camera (C1, C2, C3, C4);
an illumination system associated with each optical block, wherein each illumination system includes at least one light source configured to illuminate the container (1) simultaneously with a triggering of the camera (C1, C2, C3, C4) of its associated optical block; and
an analyzer configured to inspect said mark (5) engraved on the surface of the container (1) based on the implementation of an algorithm on images of the container (1) obtained by the four optical blocks,
wherein
each optical block further includes an optical assembly formed by at least four mirrors (e1, e2, e4, e5) to allow the camera (C1, C2, C3, C4) of each optical block to acquire two simultaneous images of the container (1), so as to obtain eight different views of the container (1), arranged at about 45 degrees to each other.

2. System according to claim 1, wherein the optical assembly includes a fifth mirror (e3) configured to allow camera adjustments (C1, C2, C3, C4).

3. System according to claim 1 or 2, further comprising a synchronization system of the container (1) inspection point, wherein said synchronization system includes a photocell (20) and a pulse encoder (30).

4. System according to any one of the preceding claims, wherein each illumination system includes two stroboscopic light sources (LS1a, LS1b, LS2a, LS2b, LS3a, LS3b, LS4a, LS4b).

5. System according to any one of the previous claims, wherein the container (1) is made of transparent material.

6. System according to claim 5, wherein each illumination system includes two stroboscopic light sources (LS1a, LS1b, LS2a, LS2b, LS3a, LS3b, LS4a, LS4b), arranged behind the container (1).

7. System according to any one of the previous claims 1 to 4, wherein the container (1) is made of translucent or opaque material.

8. System according to claim 7, wherein each illumination system includes two stroboscopic light sources. arranged in front of the container (1).

9. System according to claim 6 or 8, wherein the two light sources are configured to illuminate the container (1) with an angle of incidence of about 20-25 degrees.

10. System according to any one of the previous claims, wherein the cameras (C1, C2, C3, C4) are configured to perform said triggering sequentially, one after the other.

11. System according to any one of the previous claims, wherein the container (1) is cylindrical.

12. System according to any one of the previous claims, wherein the container (1) is made of glass, plastic, metal, wood or cork.

13. A method for inspecting marks on the surface of containers, comprising:
a) moving at least one container (1) having a mark (5) engraved on a surface of the container (1) via a means for displacement (10) of an inspection system,
wherein:
the inspection system further comprises four optical blocks and one illumination system associated with each optical block,
each optical block is displaced with respect to the other three so that between the four optical blocks they cover an area of 360 degrees around an inspection point of the container (1),
each optical block includes a camera (C1, C2, C3, C4) and an optical assembly comprising at least four mirrors (e1, e2, e4, e5) to allow the camera (C1, C2, C3, C4) of each optical block to acquire two simultaneous images of the container (1), so as to obtain eight different views of the container (1), arranged at about 45 degrees to each other, and
each illumination system includes at least one light source for illuminating the container (1) simultaneously with a triggering of the camera (C1, C2, C3, C4) of its associated optical block;
b) when the container (1) reaches the inspection point, illuminating the container (1) and acquiring, by each optical block, two simultaneous images of the container (1), obtaining eight different views of the container (1), each of the views being arranged at about 45 degrees to one another; and
c) inspect, by an analyzer, said mark (5) engraved on the surface of the container (1) based on the implementation of an algorithm on the eight different views obtained.

14. Method according to claim 13, wherein the acquisition is performed sequentially, one camera after another.

15. Method according to claim 13 or 14, wherein each illumination system includes two stroboscopic light sources (LS1a, LS1b, LS2a, LS2b, LS3a, LS3b, LS4a, LS4b), arranged in front of or behind the container (1), the illumination of the container (1) being performed in step b) at an angle of incidence of about 20-25 degrees.

## Patentansprüche

1. System zur Inspektion von Markierungen auf der Oberfläche von Behältern, umfassend:
ein Mittel zur Verschiebung (10) mindestens eines Behälters (1), wobei der mindestens eine Behälter (1) eine auf einer Oberfläche des Behälters (1) eingravierte Markierung (5) enthält;
vier optische Blöcke, wobei jeder optische Block in Bezug auf die anderen drei versetzt ist, sodass zwischen den vier optischen Blöcken ein Bereich von 360 Grad um einen Inspektionspunkt des Behälters (1) abgedeckt wird, und wobei jeder optische Block eine Kamera (C1, C2, C3, C4) enthält;
ein Beleuchtungssystem, das jedem optischen Block zugeordnet ist, wobei jedes Beleuchtungssystem mindestens eine Lichtquelle enthält, die dazu konfiguriert ist, den Behälter (1) gleichzeitig mit einer Auslösung der Kamera (C1, C2, C3, C4) seines zugeordneten optischen Blocks zu beleuchten; und
einen Analysator, der dazu konfiguriert ist, die auf der Oberfläche des Behälters (1) eingravierte Markierung (5) basierend auf der Implementierung eines Algorithmus auf Bildern des Behälters (1), die von den vier optischen Blöcken erhalten werden, zu inspizieren, wobei
jeder optische Block ferner eine optische Baugruppe enthält, die durch mindestens vier Spiegel (e1, e2, e4, e5) gebildet wird, damit die Kamera (C1, C2, C3, C4) jedes optischen Blocks zwei gleichzeitige Bilder des Behälters (1) aufnehmen kann, um acht unterschiedliche Ansichten des Behälters (1) zu erhalten, die unter etwa 45 Grad zueinander angeordnet sind.

2. System nach Anspruch 1, wobei die optische Baugruppe einen fünften Spiegel (e3) enthält, der dazu konfiguriert ist, Kameraeinstellungen (C1, C2, C3, C4) zu ermöglichen.

3. System nach Anspruch 1 oder 2, ferner umfassend ein Synchronisationssystem des Inspektionspunktes des Behälters (1), wobei das Synchronisationssystem eine Fotozelle (20) und einen Impulsgeber (30) enthält.

4. System nach einem der vorhergehenden Ansprüche, wobei jedes Beleuchtungssystem zwei stroboskopische Lichtquellen (LS1a, LS1b, LS2a, LS2b, LS3a, LS3b, LS4a, LS4b) enthält.

5. System nach einem der vorhergehenden Ansprüche, wobei der Behälter (1) aus transparentem Material hergestellt ist.

6. System nach Anspruch 5, wobei jedes Beleuchtungssystem zwei stroboskopische Lichtquellen (LS1a, LS1b, LS2a, LS2b, LS3a, LS3b, LS4a, LS4b) enthält, die hinter dem Behälter (1) angeordnet sind.

7. System nach einem der vorhergehenden Ansprüche 1 bis 4, wobei der Behälter (1) aus durchscheinendem oder undurchsichtigem Material hergestellt ist.

8. System nach Anspruch 7, wobei jedes Beleuchtungssystem zwei stroboskopische Lichtquellen enthält, die vor dem Behälter (1) angeordnet sind.

9. System nach Anspruch 6 oder 8, wobei die beiden Lichtquellen dazu konfiguriert sind, den Behälter (1) mit einem Einfallswinkel von etwa 20-25 Grad zu beleuchten.

10. System nach einem der vorhergehenden Ansprüche, wobei die Kameras (C1, C2, C3, C4) dazu konfiguriert sind, die Auslösung sequentiell, eine nach der anderen, durchzuführen.

11. System nach einem der vorhergehenden Ansprüche, wobei der Behälter (1) zylindrisch ist.

12. System nach einem der vorhergehenden Ansprüche, wobei der Behälter (1) aus Glas, Kunststoff, Metall, Holz oder Kork hergestellt ist.

13. Verfahren zur Inspektion von Markierungen auf der Oberfläche von Behältern, umfassend:
a) Bewegen mindestens eines Behälters (1) mit einer auf einer Oberfläche des Behälters (1) eingravierten Markierung (5) über ein Mittel zur Verschiebung (10) eines Inspektionssystems, wobei:
das Inspektionssystem ferner vier optische Blöcke und ein Beleuchtungssystem umfasst, das jedem optischen Block zugeordnet ist,
jeder optische Block in Bezug auf die anderen drei verschoben wird, sodass zwischen den vier optischen Blöcken eine Fläche von 360 Grad um einen Inspektionspunkt des Behälters (1) abgedeckt wird, wobei:
jeder optische Block eine Kamera (C1, C2, C3, C4) und eine optische Baugruppe enthält, die mindestens vier Spiegel (e1, e2, e4, e5) umfasst, damit die Kamera (C1, C2, C3, C4) jedes optischen Blocks zwei gleichzeitige Bilder des Behälters (1) aufnehmen kann, um acht unterschiedliche Ansichten des Behälters (1) zu erhalten, die unter etwa 45 Grad zueinander angeordnet sind, und
jedes Beleuchtungssystem mindestens eine Lichtquelle enthält, um den Behälter (1) gleichzeitig mit einer Auslösung der Kamera (C1, C2, C3, C4) seines zugeordneten optischen Blocks zu beleuchten;
b) wenn der Behälter (1) den Inspektionspunkt erreicht, Beleuchten des Behälters (1) und Erfassen von zwei gleichzeitigen Bildern des Behälters (1) durch jeden optischen Block, um acht unterschiedliche Ansichten des Behälters (1) zu erhalten, wobei jede der Ansichten unter etwa 45 Grad zueinander angeordnet ist; und
c) Inspizieren der auf der Oberfläche des Behälters (1) eingravierten Markierung (5) durch einen Analysator basierend auf der Implementierung eines Algorithmus auf den acht erhaltenen unterschiedlichen Ansichten.

14. Verfahren nach Anspruch 13, wobei die Erfassung sequentiell durchgeführt wird, eine Kamera nach der anderen.

15. Verfahren nach Anspruch 13 oder 14, wobei jedes Beleuchtungssystem zwei stroboskopische Lichtquellen (LS1a, LS1b, LS2a, LS2b, LS3a, LS3b, LS4a, LS4b) enthält, die vor oder hinter dem Behälter (1) angeordnet sind, wobei die Beleuchtung des Behälters (1) in Schritt b) unter einem Einfallswinkel von etwa 20-25 Grad durchgeführt wird.

## Revendications

1. Un système d'inspection de marques sur la surface de récipients, comprenant :
un moyen de déplacement (10) d'au moins un récipient (1), dans lequel ledit au moins un récipient (1) comprend une marque (5) gravée sur une surface du récipient (1) ;
quatre blocs optiques, dans lesquels chaque bloc optique est décalé par rapport aux trois autres de sorte qu'entre les quatre blocs optiques ils couvrent une zone de 360 degrés autour d'un point d'inspection du récipient (1), et dans lesquels chaque bloc optique comprend une caméra (C1, C2, C3, C4) ;
un système d'illumination associé à chaque bloc optique, dans lequel chaque système d'illumination comprend au moins une source lumineuse configurée pour illuminer le récipient (1) simultanément avec un déclenchement de la caméra (C1, C2, C3, C4) de son bloc optique associé ; et
un analyseur configuré pour inspecter ladite marque (5) gravée sur la surface du récipient (1) sur la base de la mise en œuvre d'un algorithme sur des images du récipient (1) obtenues par les quatre blocs optiques, dans lequel
chaque bloc optique comprend en outre un ensemble optique formé d'au moins quatre miroirs (e1, e2, e4, e5) afin de permettre à la caméra (C1, C2, C3, C4) de chaque bloc optique d'acquérir deux images simultanées du récipient (1), de manière à obtenir huit vues différentes du récipient (1), disposées à environ 45 degrés les unes par rapport aux autres.

2. Système selon la revendication 1, dans lequel l'ensemble optique comprend un cinquième miroir (e3) configuré pour permettre des réglages des caméras (C1, C2, C3, C4).

3. Système selon la revendication 1 ou 2, comprenant en outre un système de synchronisation du point d'inspection du récipient (1), dans lequel ledit système de synchronisation comprend une photocellule (20) et un codeur d'impulsions (30).

4. Système selon l'une quelconque des revendications précédentes, dans lequel chaque système d'illumination comprend deux sources lumineuses stroboscopiques (LS1a, LS1b, LS2a, LS2b, LS3a, LS3b, LS4a, LS4b).

5. Système selon l'une quelconque des revendications précédentes, dans lequel le récipient (1) est constitué d'un matériau transparent.

6. Système selon la revendication 5, dans lequel chaque système d'illumination comprend deux sources lumineuses stroboscopiques (LS1a, LS1b, LS2a, LS2b, LS3a, LS3b, LS4a, LS4b), disposées derrière le récipient (1).

7. Système selon l'une quelconque des revendications précédentes 1 à 4, dans lequel le récipient (1) est constitué d'un matériau translucide ou opaque.

8. Système selon la revendication 7, dans lequel chaque système d'illumination comprend deux sources lumineuses stroboscopiques disposées devant le récipient (1).

9. Système selon la revendication 6 ou 8, dans lequel les deux sources lumineuses sont configurées pour illuminer le récipient (1) avec un angle d'incidence d'environ 20 à 25 degrés.

10. Système selon l'une quelconque des revendications précédentes, dans lequel les caméras (C1, C2, C3, C4) sont configurées pour effectuer ledit déclenchement de manière séquentielle, l'une après l'autre.

11. Système selon l'une quelconque des revendications précédentes, dans lequel le récipient (1) est cylindrique.

12. Système selon l'une quelconque des revendications précédentes, dans lequel le récipient (1) est en verre, en plastique, en métal, en bois ou en liège.

13. Procédé d'inspection de marques sur la surface de récipients, comprenant :
a) le déplacement d'au moins un récipient (1) comportant une marque (5) gravée sur une surface du récipient (1) au moyen d'un moyen de déplacement (10) d'un système d'inspection, dans lequel :
le système d'inspection comprend en outre quatre blocs optiques et un système d'illumination associé à chaque bloc optique,
chaque bloc optique est décalé par rapport aux trois autres de sorte qu'entre les quatre blocs optiques ils couvrent une zone de 360 degrés autour d'un point d'inspection du récipient (1),
chaque bloc optique comprend une caméra (C1, C2, C3, C4) et un ensemble optique comprenant au moins quatre miroirs (e1, e2, e4, e5) afin de permettre à la caméra (C1, C2, C3, C4) de chaque bloc optique d'acquérir deux images simultanées du récipient (1), de manière à obtenir huit vues différentes du récipient (1), disposées à environ 45 degrés les unes par rapport aux autres, et
chaque système d'illumination comprend au moins une source lumineuse destinée à illuminer le récipient (1) simultanément avec un déclenchement de la caméra (C1, C2, C3, C4) de son bloc optique associé ;
b) lorsque le récipient (1) atteint le point d'inspection, l'illumination du récipient (1) et l'acquisition, par chaque bloc optique, de deux images simultanées du récipient (1), en obtenant huit vues différentes du récipient (1), chacune des vues étant disposée à environ 45 degrés par rapport aux autres ; et
c) l'inspection, par un analyseur, de ladite marque (5) gravée sur la surface du récipient (1) sur la base de la mise en œuvre d'un algorithme sur les huit vues différentes obtenues.

14. Procédé selon la revendication 13, dans lequel l'acquisition est effectuée de manière séquentielle, une caméra après l'autre.

15. Procédé selon la revendication 13 ou 14, dans lequel chaque système d'illumination comprend deux sources lumineuses stroboscopiques (LS1a, LS1b, LS2a, LS2b, LS3a, LS3b, LS4a, LS4b), disposées devant ou derrière le récipient (1), l'illumination du récipient (1) étant réalisée à l'étape b) avec un angle d'incidence d'environ 20 à 25 degrés.
